# FASCICULE DE BREVET EUROPEEN

(11) **EP 1 216 388 B1**
(45) Date de publication et mention de la délivrance du brevet: **13.10.2004**
(21) Numéro de dépôt: 00967943.2
(22) Date de dépôt: 20.09.2000
(51) Int. Cl.: F24J 2/04

(54) **DISPOSITIF DE TRANSFERT THERMIQUE ENTRE DEUX PAROIS**
VORRICHTUNG ZUM WÄRMEAUSTAUCH ZWISCHEN ZWEI WÄNDEN
DEVICE FOR HEAT TRANSFER BETWEEN TWO WALLS

(30) Priorité: 28.09.1999 FR 9912080
(43) Date de publication de la demande: 26.06.2002
(73) Titulaire: MASA-THERM S.A., 2043 Boudevilliers (CH)
(72) Inventeur: RYLEWSKI, Eugeniusz, F-78470 Saint Remy les Chevreuse (FR)
(74) Mandataire: Bezault, Jean
(86) Numéro de dépôt international: PCT/FR2000/002608
(87) Numéro de publication internationale: WO 2001/023812

(56) Documents cités:
- AT-B- 380 946
- FR-A- 2 578 312
- US-A- 4 346 693
- CHUN ET AL: "The thermal diode concept for the utilization of solar energy" PROCEEDINGS OF THE INTERSOCIETY ENERGY CONVERSION ENGINEERING CONFERENCE, vol. 31, 11 août 1996 (1996-08-11), pages 1709-1714, XP000701516 New York

## Description

L'invention concerne un dispositif de transfert thermique entre une première paroi et une seconde paroi, en contact respectivement avec une première masse thermique et une seconde masse thermique.

On connaît déjà des dispositifs de ce genre qui sont utilisés en particulier pour transférer de la chaleur entre une paroi propre à être chauffée par rayonnement solaire et une autre paroi, tel que par exemple un mur d'un bâtiment, un réservoir d'eau, etc. En ce cas, l'une des masses thermiques est l'air ambiant extérieur, tandis que l'autre masse thermique est le bâtiment, le réservoir, etc.

Dans cette application particulière, de tels dispositifs doivent pouvoir transférer la chaleur provenant du rayonnement solaire vers la paroi à chauffer, tout en empêchant un transfert thermique en sens inverse lorsque le rayonnement solaire a cessé.

Le document FR-A-2578312 décrit un dispositif de transfert thermique comprenant les caractéristiques du préambule de la revendication 1.

Les dispositifs connus ne permettent pas toujours de maîtriser toutes les situations rencontrées en pratique et sont généralement limités au chauffage d'une paroi et d'une masse thermique associée, à partir du rayonnement solaire et à l'isolation thermique de cette masse thermique lorsque le rayonnement solaire a cessé.

On trouve aussi d'autres situations pour lesquelles il serait souhaitable de refroidir la masse thermique en question.

Il existe donc un besoin de procurer un dispositif de transfert thermique susceptible de répondre à différentes situations pour permettre notamment soit un chauffage ou une isolation thermique, soit encore un refroidissement ou une isolation thermique.

L'invention propose à cet effet un dispositif de transfert thermique du type défini en introduction, lequel comprend un module isolant propre à être interposé entre la première paroi et la seconde paroi pour délimiter une boucle fermée de circulation d'un fluide caloporteur, qui comporte un premier canal s'étendant sensiblement verticalement le long de la première paroi et un second canal s'étendant sensiblement verticalement le long de la seconde paroi, le premier canal et le second canal étant décalés mutuellement dans la direction verticale pour définir un "canal bas" et "un canal haut", ainsi qu'un canal supérieur reliant le premier canal et le second canal et un canal inférieur reliant le premier canal et le second canal,
en sorte que la circulation du fluide caloporteur s'effectue naturellement dans la boucle lorsque le canal bas se trouve à une température supérieure au canal haut, ce qui permet un transfert de chaleur,
et que la circulation du fluide est bloquée naturellement dans la boucle lorsque le canal bas se trouve à une température inférieure au canal haut, ce qui interdit un transfert de chaleur en formant un isolant thermique.

On procure ainsi un dispositif de transfert thermique que l'on peut qualifier de "diode thermique" par analogie à l'électricité.

Ce dispositif de transfert thermique, qui trouve de nombreuses applications permet, grâce à la configuration des canaux, et en particulier grâce au décalage vertical du premier canal et du second canal, d'autoriser ou d'interdire une circulation du fluide caloporteur par simple mouvement de convexion, et cela en fonction des températures respectives du premier canal et du second canal.

Autrement dit, la circulation du fluide caloporteur s'effectue ou se bloque de façon naturelle grâce à la convexion du fluide caloporteur.

En effet, lorsque le canal bas se trouve à une température supérieure au canal haut, le fluide a tendance à monter naturellement du canal bas vers le canal haut en empruntant le canal supérieur (lequel est ascendant). Ensuite, le fluide se refroidit dans le canal haut, qui a une température plus faible, et descend naturellement pour regagner le canal bas par le canal inférieur (qui est descendant), et ainsi de suite.

Inversement, lorsque le canal bas se trouve à une température inférieure au canal haut, le fluide a tendance à monter pour gagner le canal haut et à stagner dans ce canal qui se trouve à une température supérieure à celle du canal bas. Du fait de cette stagnation, le canal haut est rempli du fluide caloporteur chaud, ce qui permet de fournir une isolation thermique à la masse thermique située du côté du canal haut. On se trouve alors en présence d'un phénomène de stratification de température dans lequel le fluide caloporteur le plus chaud stagne en partie supérieure de la boucle et le fluide caloporteur le plus froid stagne en partie inférieure de la boucle.

On comprendra qu'un tel dispositif trouve de nombreuses applications, l'une d'entre elles étant le chauffage, l'isolation thermique ou le refroidissement des bâtiments.

Dans une forme de réalisation de l'invention, le premier canal constitue un canal bas et le second canal constitue un canal haut, ce qui permet d'assurer un échange thermique lorsque la température du premier canal est supérieure à celle du second canal et d'interdire un échange thermique lorsque la température du premier canal est inférieure à celle du second canal.

Dans une autre forme de réalisation, le premier canal constitue un canal haut et le second canal constitue un canal bas, ce qui permet d'assurer un échange thermique lorsque la température du premier canal est inférieure à celle du second canal et d'interdire un échange thermique lorsque la température du premier canal est supérieure à celle du second canal.

Dans un mode de réalisation de l'invention, le dispositif comprend des moyens de sélection pour placer le dispositif dans l'un ou l'autre de deux états comprenant un premier état dans lequel le premier canal constitue un canal bas et le second canal constitue un canal haut, et un second état dans lequel le premier canal constitue un canal haut et le second canal constitue un canal bas.

Il en résulte qu'un même dispositif peut être utilisé pour servir par exemple au chauffage, au refroidissement ou à l'isolation thermique d'un bâtiment.

Ainsi par exemple, il est possible avec ce dispositif d'assurer, pendant la période hivernale, le chauffage du bâtiment le jour par rayonnement solaire et l'isolation thermique du bâtiment la nuit. Il est également possible, pendant la période d'été, d'assurer l'isolation thermique du bâtiment le jour et le refroidissement la nuit, si la température extérieure est inférieure à la température intérieure du bâtiment.

Dans une forme de réalisation, le dispositif comprend des premiers modules configurés dans le premier état et des seconds modules configurés dans le second état, et les moyens de sélection comprennent des moyens pour rendre opératoires soit les premiers modules, soit les seconds modules.

Dans une autre forme de réalisation, les modules sont configurés dans un état, et les moyens de sélection comprennent des moyens de retournement pour retourner les modules afin qu'ils se trouvent dans l'autre des états.

Ainsi par exemple, le dispositif peut être agencé sous la forme d'un volet ou analogue regroupant un ou plusieurs modules et susceptible de passer du premier état au second état, ou inversement, par retournement.

Il est envisageable aussi que le dispositif comprenne des moyens de blocage pour bloquer volontairement la circulation du fluide caloporteur et interdire ainsi tout transfert thermique.

Dans une application préférentielle de l'invention, la première paroi est propre à être exposée à un rayonnement solaire, tandis que la seconde paroi est adossée à une masse thermique à chauffer ou à refroidir.

Ainsi, la seconde paroi peut par exemple être un mur d'un bâtiment.

Le fluide caloporteur est de préférence de l'air, mais il est possible d'utiliser d'autres milieux, en particulier des liquides.

Le module est formé avantageusement d'un matériau isolant. Celui-ci peut être choisi notamment parmi un polymère, un béton cellulaire et un matériau souple tel qu'un tissu.

Dans une forme de réalisation, le module comprend un noyau isolant, propre à être placé entre la première paroi et la seconde paroi pour contribuer à définir respectivement le premier canal et le second canal, ainsi qu'une cloison supérieure isolante et une cloison inférieure isolante propres à être placées respectivement au-dessus et au-dessous du noyau pour contribuer à définir respectivement le canal supérieur et le canal inférieur.

Dans la description qui suit, faite seulement à titre d'exemple, on se réfère aux dessins annexés, sur lesquels :
- la figure 1 est une vue en coupe d'un dispositif selon une première forme de réalisation de l'invention fonctionnant en mode chauffage ;
- la figure 2 est une vue analogue à la figure 1 représentant le même dispositif fonctionnant en mode isolation thermique;
- la figure 3 est une vue de face du dispositif des figures 1 et 2 ;
- la figure 4 est une vue en coupe d'un dispositif selon une deuxième forme de réalisation de l'invention, fonctionnant en mode isolation thermique ;
- la figure 5 est une vue analogue à la figure 4 représentant le dispositif fonctionnant en mode refroidissement ;
- la figure 6 est une vue en coupe d'un dispositif selon une troisième forme de réalisation de l'invention, agencé sous la forme d'un volet placé dans un premier état ;
- la figure 7 est une vue analogue à la figure 6 montrant le volet placé dans un second état ;
- la figure 8 est une vue en coupe horizontale montrant un volet agencé coulissant en position escamotée ;
- la figure 9 est une vue analogue à la figure 8 montrant le volet en position active ;
- la figure 10 est une vue en coupe verticale d'un dispositif selon une autre forme de réalisation de l'invention fonctionnant en mode chauffage ;
- la figure 11 est une vue analogue à la figure 10 montrant le dispositif fonctionnant en mode d'isolation thermique ;
- les figures 12 et 13 sont des vues en coupe d'un dispositif selon l'invention comprenant des moyens de blocage et représenté dans deux positions différentes ;
- les figures 14 et 15 sont des vues analogues aux figures 12 et 13 montrant un autre dispositif comprenant des moyens de blocage et représenté dans deux positions différentes ;
- les figures 16 et 17 sont des vues respectivement en perspective et de face d'un dispositif comprenant des modules selon les figures 12 et 13 qui alternent avec des modules selon les figures 14 et 15 ;
- les figures 18 et 19 sont des vues en coupe d'un dispositif selon l'invention comprenant des moyens de sélection et représenté dans deux positions différentes ;
- les figures 20 et 21 sont des vues respectivement en perspective et en coupe d'un dispositif selon l'invention réalisé sous la forme d'un bloc moulé ;
- la figure 22 est une vue en coupe d'un dispositif selon l'invention utilisé comme capteur solaire pour chauffer de l'eau ;
- la figure 23 est une vue de face d'un dispositif selon l'invention agencé sous la forme d'un volet pivotant ;
- la figure 24A est une vue schématique en coupe horizontale du volet placé de la figure 23 dans un premier état ;
- la figure 24B est une vue en coupe verticale correspondant à la figure 24A ;
- les figures 25A et 25B correspondent respectivement aux figures 24A et 24B pour un second état du volet ;
- la figure 26 est une vue de face d'un dispositif selon l'invention réalisé sous la forme d'un élément tournant ;
- la figure 27 est une vue en coupe horizontale du dispositif de la figure 26 ;
- la figure 28A est une vue en coupe verticale du dispositif des figures 26 et 27 dans un premier état ; et
- la figure 28B est une vue analogue à la figure 28 pour un second état du dispositif.

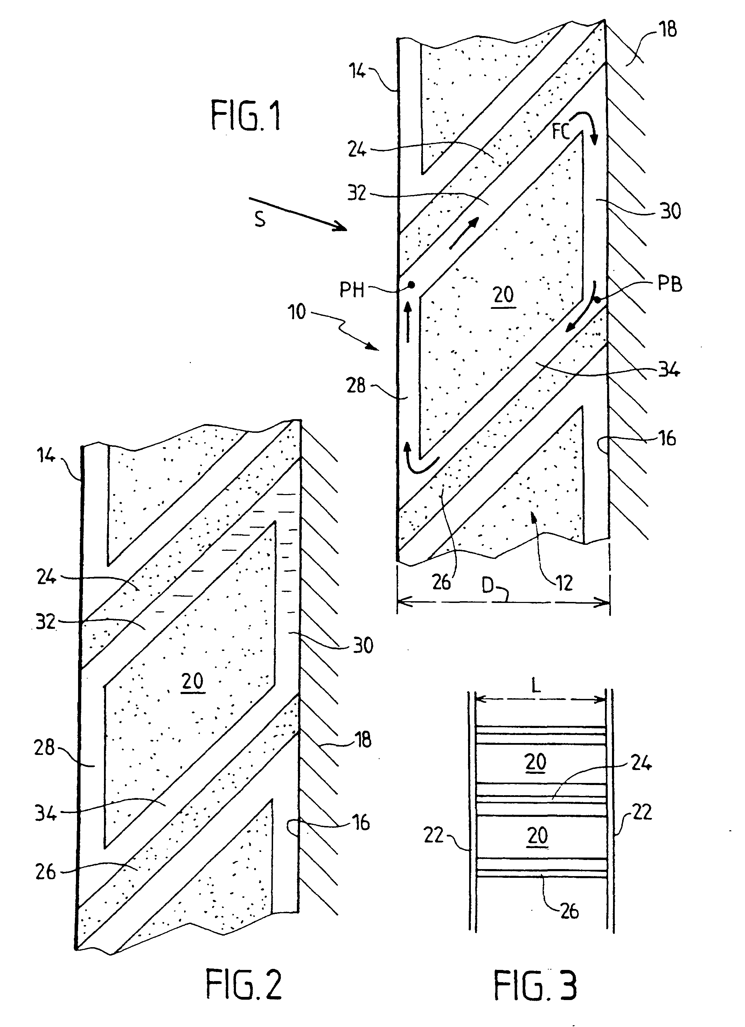

On se réfère d'abord à la figure 1 qui montre un dispositif 10 selon l'invention comprenant un module isolant 12 propre à être interposé entre une première paroi 14 et une deuxième paroi 16.

Dans l'exemple, la paroi 14 constitue une paroi extérieure propre à être exposée à un rayonnement solaire S, tandis que la paroi 16 fait partie d'un mur 18 d'un bâtiment. Les parois 14 et 16 sont sensiblement verticales et sont situées à une distance D qui peut, à titre d'exemple, être comprise entre 100 et 200 mm.

La paroi 14 peut, dans sa réalisation la plus simple, être constituée d'une simple tôle métallique, par exemple revêtue d'une couleur noire.

Le module 12 comprend au moins un noyau isolant 20 qui possède en section droite verticale sensiblement la forme d'un parallélogramme. Ce noyau isolant 20 est agencé par exemple entre deux montants verticaux 22 (figure 3) formant cadre. Ce noyau isolant 20 est placé entre la première paroi et la seconde paroi sans toutefois venir en contact avec elles. Le module comprend en outre une cloison supérieure isolante 24 et une cloison inférieure isolante 26 propres à être placées respectivement au-dessus et au-dessous du noyau 20. Ces deux cloisons 24 et 26 sont disposées inclinées et s'étendent entre les parois 14 et 16.

On notera que la cloison 24 constitue une cloison inférieure pour un autre noyau isolant 20 placé au-dessus et que la cloison 26 constitue une cloison supérieure pour un autre noyau 20 placé au-dessous. Les cloisons 24 et 26 sont également montées entre les montants 22 (figure 3).

On comprendra que le noyau 20, les cloisons 24 et 26 et les parois 14 et 16 contribuent ainsi à définir un parcours de circulation en boucle fermée. Cette boucle comprend un premier canal 28 s'étendant sensiblement verticalement le long de la première paroi 14, et un second canal 30 s'étendant sensiblement verticalement le long de la seconde paroi 16 (figure 1).

Ces canaux 28 et 30 sont décalés mutuellement dans la direction verticale pour définir un "canal bas" (ici le premier canal 28) et un "canal haut" (ici le second canal 30).

Les canaux 28 et 30 sont reliés, en partie supérieure, par un canal supérieur 32 et, en partie inférieure, par un canal 34. Ces canaux 32 et 34 sont sensiblement parallèles entre eux et sont dirigés ascendants depuis le canal 28 en direction du canal 30. Du fait que les canaux 28 et 30 sont décalés, le canal 28 possède un point haut PH qui est sensiblement au même niveau que le point bas PB que comporte le canal 30. Bien entendu, le point haut PH pourrait être à un niveau légèrement supérieur au point bas PB ou encore à un niveau légèrement inférieur au point bas PB.

Les canaux 28, 30, 32 et 34 sont étanches et parcourus par un fluide caloporteur FC qui, dans l'exemple, est de l'air. Cet air peut circuler naturellement dans les canaux, sans aucune aide extérieure, en fonction des différences de température existant entre les parois 14 et 16.

Dans le cas de la figure 1, le dispositif est utilisé en hiver et de jour pour assurer le chauffage du mur 18 à partir du rayonnement solaire S. La paroi 14 et donc le canal 28 (canal bas) sont à une température supérieure à la paroi 16, donc au canal 30 (canal haut). Le fluide FC est chauffé dans le canal 28 et a tendance à monter naturellement, du fait qu'il devient plus léger, et emprunte ainsi le canal 32 qui est ascendant pour gagner le canal 30 le long de la paroi 16. Comme cette paroi est à une température inférieure à la paroi 14, le fluide se refroidit et a tendance à descendre naturellement vers le bas pour longer la paroi 16 et descendre ensuite par le canal 34 pour regagner le canal 28 et ainsi de suite. Tant que la paroi 14 est à une température supérieure à la paroi 16, le fluide FC circule naturellement dans le sens indiqué par les flèches de la figure 1 pour assurer un transfert thermique qui permet de chauffer le mur 18 à partir du rayonnement solaire S.

Dans la forme de réalisation représentée, les noyaux 20 et les cloisons 24 et 26 sont réalisés en un matériau isolant qui peut être par exemple un polymère (polystyrène, polyuréthanne, etc) ou encore un béton cellulaire, encore appelé béton léger.

La largeur L des noyaux 20 et des cloisons 24 et 26 peut être par exemple comprise entre 50 cm et 5 mètres (figure 3).

On se réfère maintenant à la figure 2 qui montre le dispositif de la figure 1 en hiver et de nuit. Dans cette configuration, le rayonnement solaire S a cessé et la paroi 14 se trouve exposée à l'air ambiant qui est à une température inférieure à la paroi 16 adossée au mur 18. Il en résulte que la paroi 14 constitue une paroi froide et la paroi 16 une paroi chaude.

De ce fait, le fluide FC est échauffé par la paroi 16 et a tendance à stagner dans le canal 30 situé le long de la paroi 16 et dans le canal 32, du fait que le canal 30 (canal haut) et le canal 32 se trouvent placés à un niveau supérieur au canal 28 (canal bas) et au canal 34. Ainsi, la circulation du fluide FC est bloquée naturellement et interdit un transfert de chaleur entre les parois 14 et 16. Le fluide FC le plus chaud stagne en partie supérieure de la boucle et le fluide FC le plus froid en partie inférieure de la boucle.

Comme le fluide FC chaud a tendance à stagner dans le canal 30, il en résulte la formation d'un isolement thermique diminuant considérablement la déperdition de chaleur.

On comprendra que l'on procure ainsi un dispositif de transfert thermique, que l'on peut qualifier de "diode thermique" fonctionnement de manière naturelle, sans aucune intervention extérieure, pour assurer, en période hivernale, le chauffage de jour (figure 1) et l'isolation thermique de nuit (figure 2).

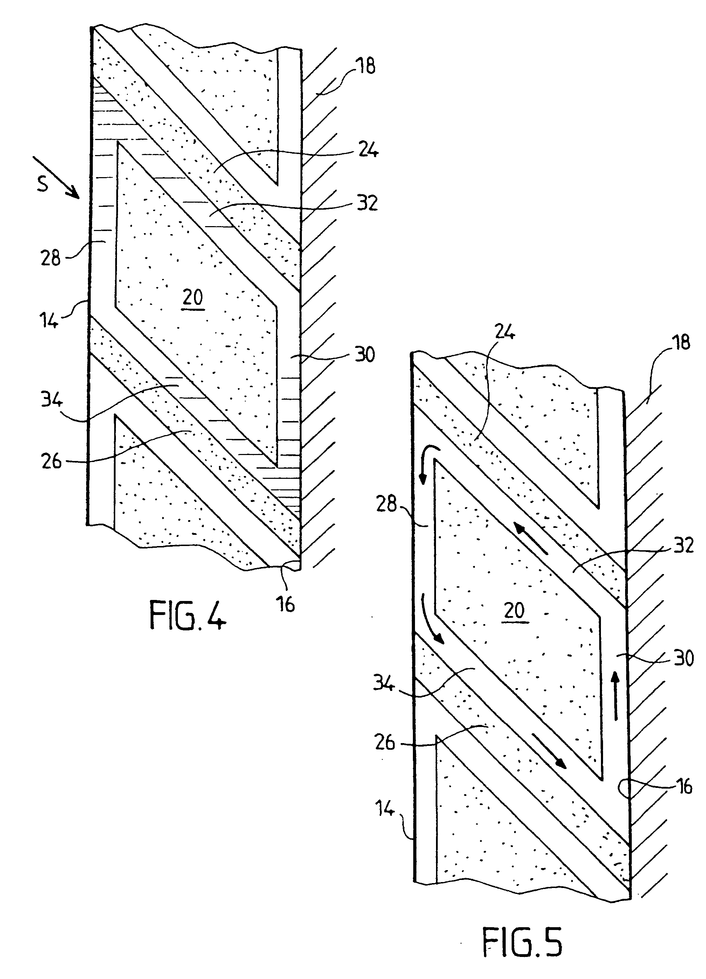

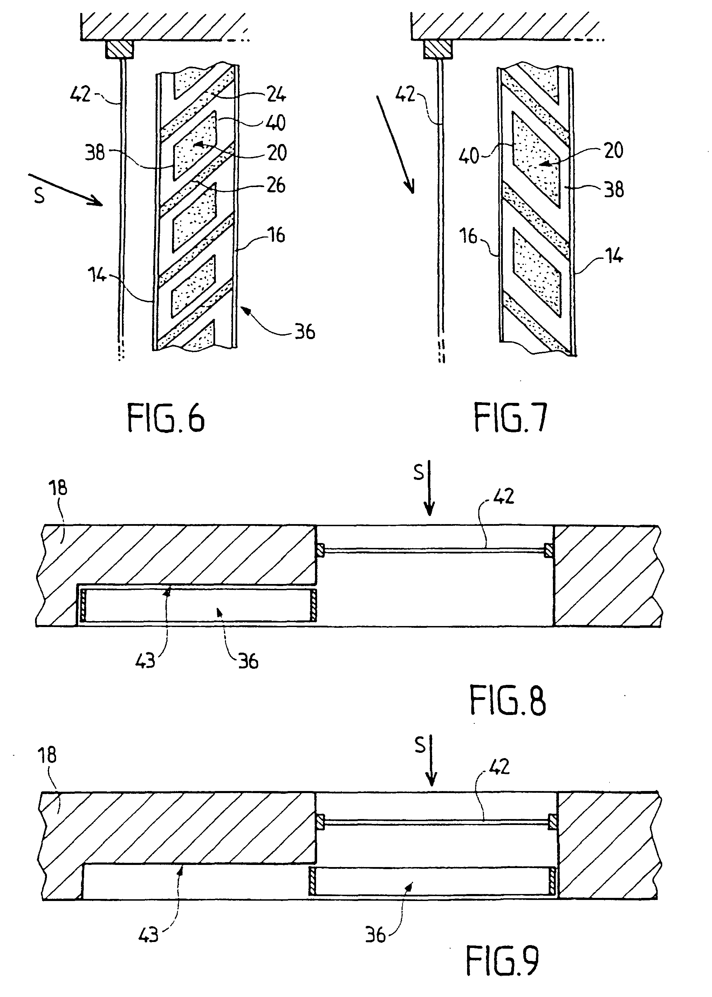

On se réfère maintenant aux figures 4 et 5 qui représentent un autre dispositif de l'invention qui s'apparente à celui des figures 1 et 2, mais dont la configuration est différente.

En effet, dans le cas des figures 4 et 5, le premier canal 28 constitue un canal haut et le second canal 30 un canal bas, si bien que le canal supérieur 32 et le canal inférieur 34 sont dirigés descendants depuis la paroi 14 vers la paroi 16. Un tel dispositif trouve notamment une application, pendant la période estivale, pour assurer l'isolation thermique d'un bâtiment le jour (figure 4) et le refroidissement de ce bâtiment la nuit (figure 5).

Pendant le jour (figure 4), la paroi 14 est exposée au rayonnement solaire. Il en résulte que le fluide FC s'échauffe le long de la paroi 14 et a tendance par conséquent à stagner dans la partie supérieure de la boucle, c'est-à-dire dans le canal 28 (canal haut) et le canal 32. Le fluide à température inférieure a tendance à stagner dans la partie inférieure de la boucle, c'est-à-dire dans le canal 30 (canal bas) et le canal 34, c'est-à-dire du côté de la paroi 16. De ce fait, la circulation du fluide caloporteur est bloquée naturellement et on procure une isolation thermique, du fait que la chaleur fournie par le rayonnement solaire S ne peut être transférée à la paroi 16. On a avantage alors à utiliser, pour la paroi 14, une tôle blanche pour minimiser l'absorption de chaleur.

Dans le cas de la figure 5, la paroi 14 n'est plus exposée au rayonnement solaire et se trouve à une température inférieure à la paroi 16. Il en résulte que le fluide caloporteur a tendance à circuler de façon naturelle, par convexion, dans le sens indiqué par les flèches. Ainsi, le fluide FC s'échauffe dans le canal 30 (canal bas) gagne le canal 28 (canal haut) par le canal 32 puis regagne le canal 30 par le canal 34, et ainsi de suite.

On comprendra qu'il est intéressant de pouvoir disposer d'un dispositif selon les figures 1 et 2 pour la période hivernale et d'un dispositif des figures 4 et 5 pour la période estivale. Or, les deux dispositifs sont symétriques. Ainsi, il est possible de passer de la position des figures 1 et 2 à celle des figures 4 et 5 par retournement.

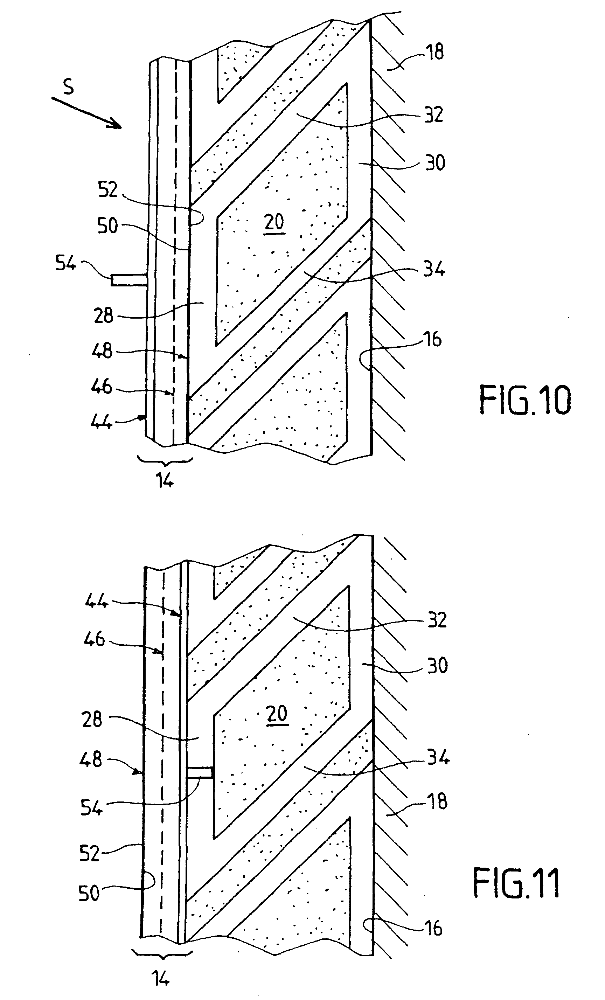

Une façon commode est de réaliser un volet ou analogue comme représenté à la figure 6. Ce volet 36 comprend des noyaux 20 alternant avec des cloisons 24 ou 26 et disposés entre deux parois 14 et 16. La paroi 14 et la paroi 16 peuvent être constituées chacune par un simple vitrage ou une tôle. La paroi 14 est noire ou de couleur sombre, tandis que la paroi 16 est blanche ou de couleur claire. Le volet 36 est placé derrière une vitre 42 d'un bâtiment, qui est soumise à un rayonnement solaire S. Le volet peut être réalisé sous la forme d'un volet coulissant horizontalement (figures 8 et 9) et propre à s'escamoter dans un encastrement 43 du mur 18 (figure 8) ou à être placé derrière la vitre 42 (figure 9).

Pendant la période hivernale, le dispositif est placé dans la position représentée à la figure 6 et fonctionne de manière analogue à celui des figures 1 et 2 décrit précédemment.

Pendant la période estivale, le volet est retourné et se trouve dans la position de la figure 7, qui correspond au fonctionnement décrit précédemment pour les figures 4 et 5. Autrement dit, on procure une isolation thermique le jour et un refroidissement la nuit. Ceci est favorisé par le fait que la surface blanche (paroi 16) est maintenant située face au rayonnement solaire S, tandis que la surface noire (paroi 14) est à l'opposé.

On se réfère maintenant aux figures 10 et 11 qui représentent une autre forme de réalisation de l'invention qui s'apparente à celle des figures 1 et 2. La différence principale résulte dans le fait que la première paroi 14 comprend successivement un vitrage 44 exposé au rayonnement solaire, un tissu 46 de verre ou de matière plastique et une tôle 48 muni d'un côté d'un revêtement noir 50 et de l'autre côté d'un revêtement blanc 52.

En outre, la paroi 14 est munie d'un organe de blocage 54 qui, dans la position de la figure 10, est dirigé vers l'extérieur. Pendant la période hivernale, le dispositif est dans la configuration de la figure 10 et fonctionne de façon analogue à celui des figures 1 et 2.

Pendant la période estivale, la paroi 14 est retournée, si bien que l'organe de blocage 54 vient fermer le canal 28. Il en résulte que la circulation du fluide caloporteur FC est interdite de manière volontaire. De ce fait, le fluide caloporteur ne peut assurer un transfert thermique depuis la paroi 14 exposée au rayonnement solaire vers la paroi 16 du côté du mur du bâtiment.

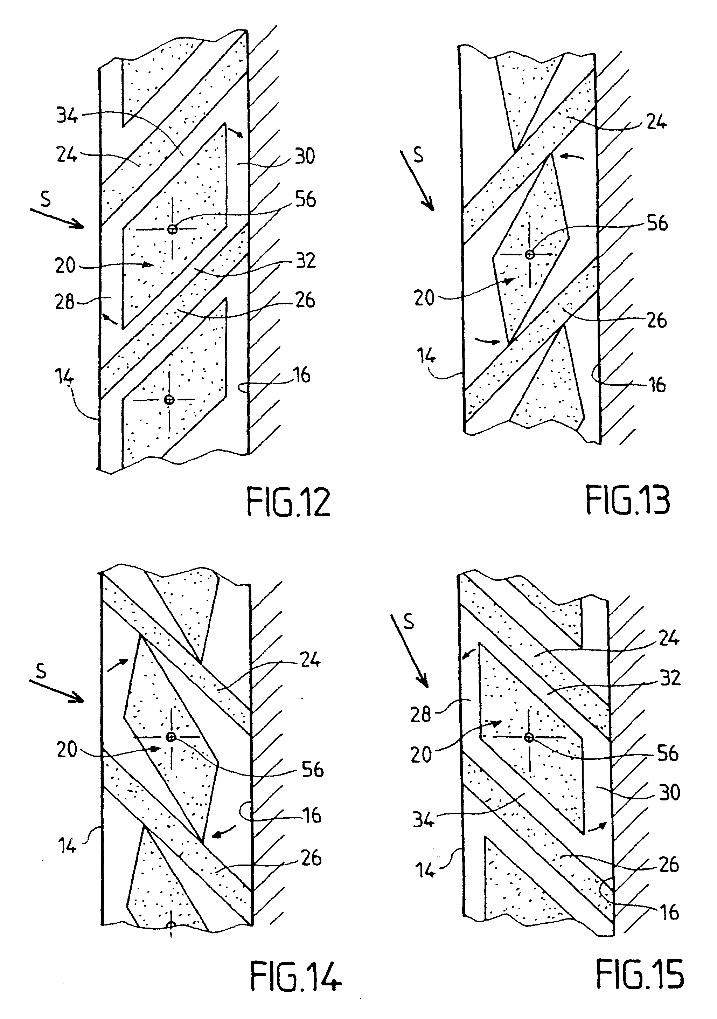

Dans la forme de réalisation des figures 12 et 13, on retrouve un dispositif qui s'apparente à celui des figures 10 et 11. Toutefois, le blocage de la circulation du fluide, en été, s'effectue ici par rotation du noyau 20 autour d'un axe 56.

Pendant la période hivernale, le noyau 20 est dans la position représentée à la figure 12, c'est-à-dire qu'il contribue à définir les canaux de circulation pour assurer le chauffage. Pendant la période estivale, on fait tourner le noyau 20 autour de son axe de manière qu'il vienne en butée avec les cloisons 24 et 26 pour bloquer la circulation du fluide dans la boucle, comme montré à la figure 13. On réalise ainsi une isolation.

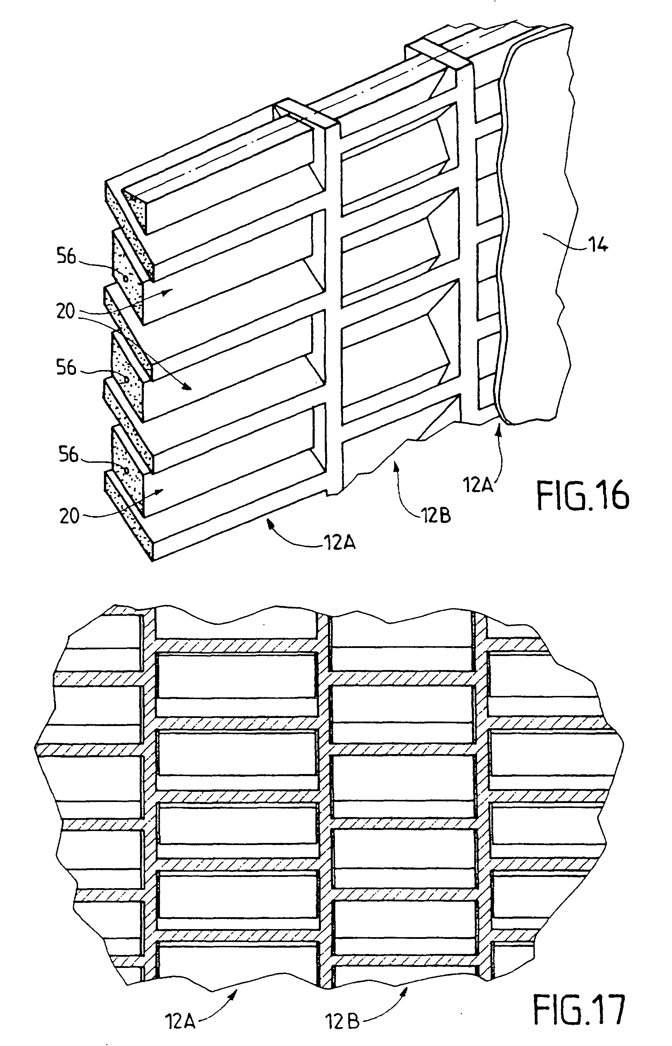

La forme de réalisation des figures 14 et 15 s'apparente à celle des figures 12 et 13, avec une disposition conforme à celle des figures 4 et 5. Cela signifie que le canal 28 et le canal 30 constituent respectivement le canal haut et le canal bas. Le noyau 20 est également monté pivotant autour d'un axe 56. Pendant la période estivale (figure 15), le noyau est placé de manière à autoriser la circulation du fluide caloporteur tandis que, pendant la période hivernale (figure 14), le noyau a pivoté pour bloquer la circulation du fluide dans les canaux 28 et 30.

Le dispositif des figures 16 et 17 comprend des premiers modules 12a conformes aux figures 12 et 13 qui alternent avec des seconds modules 12b conformes aux figures 14 et 15. Ces modules sont alignés et sont disposés de telle sorte que les noyaux 20 peuvent pivoter en synchronisme. Sur les figures 16 et 17, les modules 12a sont en position hivernale pour le chauffage (cf. figure 12) et les modules 12b en position hivernale pour l'isolation (cf. figure 14). Si l'on fait pivoter les noyaux en synchronisme les modules 12a parviennent en position estivale pour l'isolation (cf figure 13) et les modules 12b en position estivale pour le refroidissement (cf figure 15).

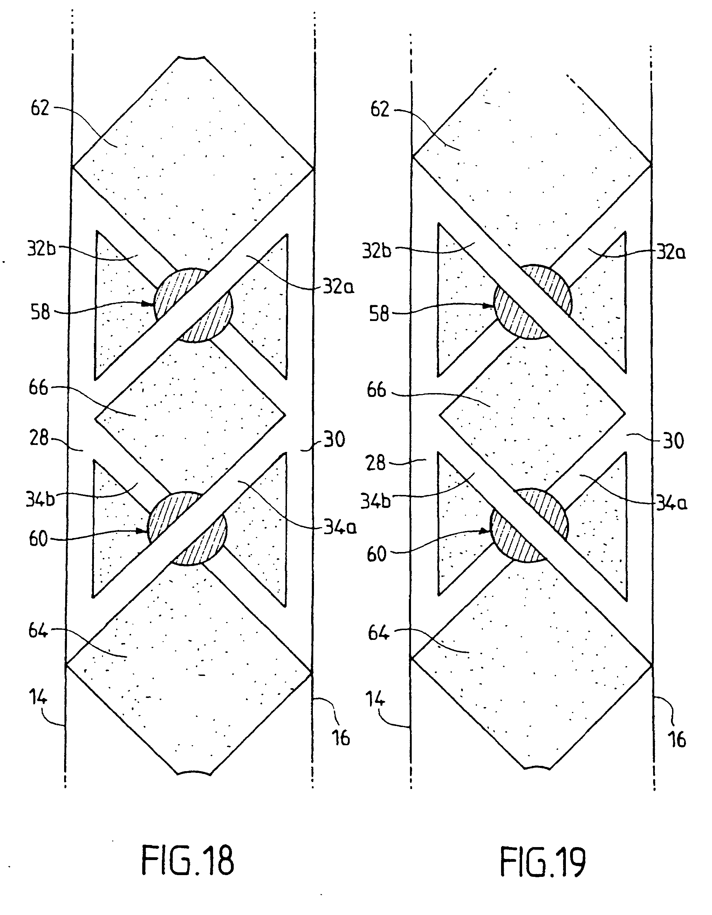

Dans la forme de réalisation des figures 18 et 19, les canaux 28 et 30 du dispositif sont reliés entre eux par deux canaux supérieurs 32a et 32b qui se coupent à angle droit et par deux canaux inférieurs 34a et 34b qui se coupent à angle droit. Au niveau des deux intersections ainsi formées sont placées respectivement deux sélecteurs 58 et 60 constitués chacun d'une vanne rotative du type à quatre voies prévues pour être actionnées en synchronisme et être placées dans l'une ou l'autre de deux positions. Les canaux précités sont délimités entre les parois 14 et 16 et des noyaux d'extrémité 62 et 64 et traversent en outre un noyau central 66.

Dans une première position, ou position hivernale, représentée à la figure 18, la circulation du fluide caloporteur est autorisée dans les canaux 32a et 34a qui sont dirigés ascendants du canal 28 vers le canal 30 et bloquée dans les canaux 32b et 34b qui sont dirigés descendants du canal 28 vers le canal 30. Le dispositif fonctionne ainsi comme celui des figures 1 et 2.

Dans une seconde position, ou position estivale, représentée à la figure 19, la circulation du fluide caloporteur est autorisée dans les canaux 32b et 34b et bloquée dans les canaux 32a et 34a. Le dispositif fonctionne ainsi comme celui des figures 4 et 5.

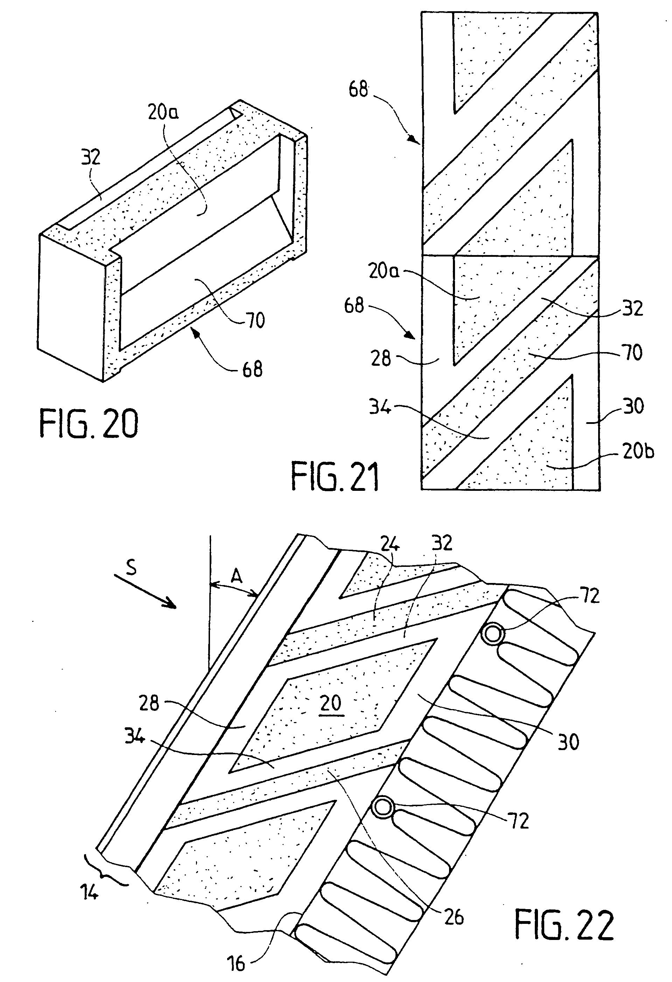

Le dispositif des figures 20 et 21 est un bloc 68 de forme générale parallélépipédique qui est moulé en un matériau isolant, par exemple en matière plastique ou en béton cellulaire. Il est prévu pour pouvoir être empilé verticalement avec un ou plusieurs autres blocs analogues comme montré à la figure 21. Il comprend deux portions de noyau 20a et 20b situés de part et d'autre d'une cloison oblique 70. Il définit deux canaux verticaux 28 et 30 situés respectivement le long de deux grandes faces verticales opposées du bloc, ainsi qu'un canal oblique 32 situé au dessus de la cloison 70 et communiquant avec le canal vertical 28 et un autre canal oblique 32 situé au dessous de la cloison 70 et communiquant avec le canal vertical 30. Lorsque les blocs sont empilés on forme un dispositif qui s'apparente soit à celui es figures 1 et 2, soit à celui des figures 4 et 5, selon que les canaux 28 sont disposés ou non du côté du rayonnement solaire.
On se réfère maintenant à la figure 22 qui montre une autre forme de réalisation de l'invention dans laquelle le dispositif s'apparente à celui des figures 1 et 2 mais est utilisé pour assurer le chauffage de l'eau qui circule dans des canalisations 72 adossées à la paroi 16.

On notera également que les parois 14 et 16 ne sont plus exactement verticales, mais inclinées d'un angle A d'environ 30° par rapport à la verticale. Là encore, comme dans les figures 1 et 2, le canal 28 constitue un canal bas et le canal 30 constitue un canal haut. Il en résulte que l'on peut assurer le chauffage de l'eau sous l'action du rayonnement solaire et empêcher ensuite le refroidissement de cette eau en procurant un isolant, lorsque le rayonnement solaire a cessé.

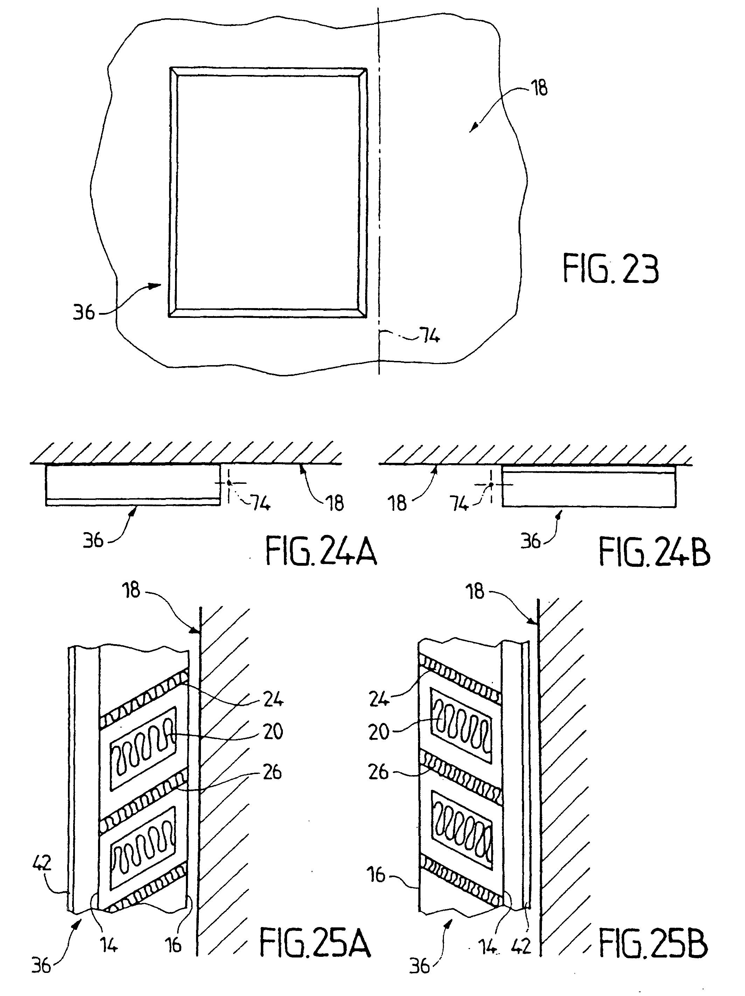

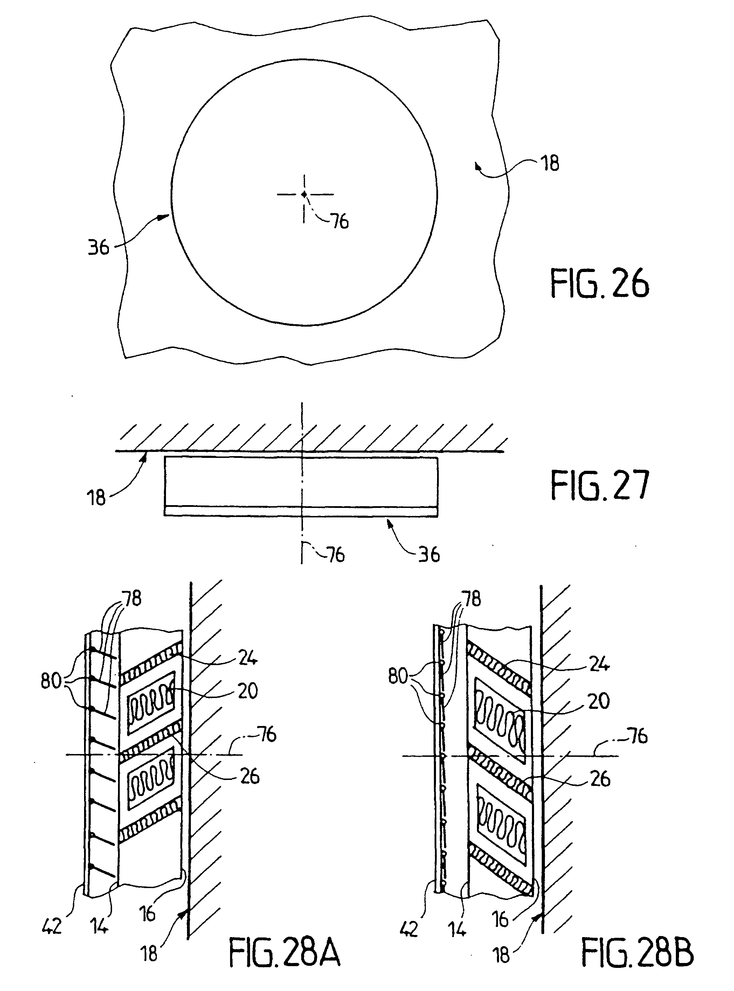

Le dispositif de la figure 23 est réalisé sous la forme d'un volet 36 monté pivotant autour d'un axe vertical 74 ce qui lui permet de prendre deux états différents, un premier état (figures 24A et 24B) correspondant à une position "hiver" et un second état (figures 25A et 25B) correspondant à une position "été". Le volet 36 est propre à pivoter le long d'un mur 18 entre les deux états précités et s'apparente ainsi à un volet ayant un pivotement dit "à la française".

Le volet 36 s'apparente à celui décrit précédemment en référence aux figures 6 et 7. Il comprend des noyaux 20 alternant avec des cloisons 24 ou 26 et disposés entre deux parois 14 et 16. La paroi 14 est ici une tôle réceptrice noire placée derrière une vitre 42, tandis que la paroi 16 est une tôle blanche. Dans la position "hiver", la vitre 42 et la paroi 14 sont disposées vers l'extérieur, tandis que la paroi 16 est disposée vers l'intérieur, c'est-à-dire côté du mur. Dans la position "été", c'est la situation inverse que l'on rencontre.

Pendant la période hivernale, le dispositif est placé dans la position des figures 24A et 24B et fonctionne de manière analogue à celui des figures 1 et 2. Pendant la période estivale, le volet est retourné et fonctionne de manière analogue à celui des figures 4 et 5.

Le dispositif de la figure 26 est réalisé sous la forme d'un élément 36 en forme de roue, monté pivotant autour d'un axe 76 perpendiculaire à un mur 18. Comme dans la forme de réalisation précédente, le dispositif comprend des noyaux 20 alternant avec des cloisons 24 ou 26 et disposés entre deux parois, à savoir une paroi extérieure 14 qui est ici une tôle noire et une paroi intérieure 16 qui est ici une tôle noire. Une vitre 42 est disposée à l'extérieur.

Entre la vitre 42 et la paroi 14 est prévue une série de lames mobiles 78 articulées chacune autour d'un axe horizontal 80 placé derrière la vitre 42. Ces lames sont de couleur blanche et sont susceptibles de pivoter en fonction de la position du volet 36. Dans un premier état (figure 28A) correspondant à une position hivernale, les lames 78 sont inclinées en fonction de la position du soleil et permettent aux rayons du soleil de venir frapper la tôle 14. Dans un second état (figure 28B) correspondant position estivale, les lames 78 pivotent à la verticale et viennent ainsi s'appliquer contre et derrière la vitre 42, empêchant ainsi l'énergie solaire de pénétrer dans le mur.

On comprendra que l'invention n'est pas limitée aux formes de réalisation décrites précédemment à titre d'exemple et qu'elle peut trouver d'autres applications, en dehors du chauffage, du refroidissement et de l'isolation de bâtiments. Ainsi, il est possible d'assurer, avec un tel dispositif, le chauffage d'un four (four solaire), le chauffage d'une piscine, d'une serre, etc. Il est possible aussi de procurer une isolation thermique à l'égard d'unités de réfrigération.

Dans tous les cas, on constitue une sorte de "diode thermique" qui permet ou interdit une circulation du fluide caloporteur de manière naturelle, ce qui simplifie la réalisation du dispositif.

En outre, bien que l'invention ait été décrite en référence à un fluide caloporteur constitué par de l'air, il est possible d'utiliser d'autres milieux, et en particulier des liquides.

Enfin, la réalisation du ou des modules est susceptible de nombreuses variantes, notamment en ce qui concerne le choix du matériau isolant. Celui-ci peut aussi être formé par exemple par des tissus ou analogues.

## Revendications

1. Dispositif de transfert thermique entre une première paroi et une seconde paroi, en contact respectivement avec une première masse thermique et une seconde masse thermique,
le dispositif comprenant un module isolant (12) propre à être interposé entre la première paroi (14) et la seconde paroi (16) pour délimiter une boucle fermée de circulation d'un fluide caloporteur (FC) qui comporte un premier canal (28) s'étendant sensiblement verticalement le long de la première paroi (14) et un second canal (30) s'étendant sensiblement verticalement le long de la seconde paroi (16), **caractérisé en ce que** le premier canal et le second canal sont décalés mutuellement dans la direction verticale pour définir un canal bas et un canal haut, ainsi qu'un canal supérieur (32) reliant le premier canal et le second canal et un canal inférieur (34) reliant le premier canal et le second canal,
en sorte que la circulation du fluide caloporteur (FC) s'effectue naturellement dans la boucle lorsque le canal bas se trouve à une température supérieure au canal haut, ce qui permet un transfert thermique,
et que la circulation du fluide caloporteur (FC) est bloquée naturellement dans la boucle lorsque le canal bas se trouve à une température inférieure au canal haut, ce qui interdit un transfert thermique en formant un isolant thermique.

2. Dispositif selon la revendication 1, **caractérisé en ce que** le premier canal (28) constitue un canal bas et le second canal (30) constitue un canal haut, ce qui permet d'assurer un échange thermique lorsque la température du premier canal est supérieure à celle du second canal et d'interdire un échange thermique lorsque la température du premier canal est inférieure à celle du second canal.

3. Dispositif selon la revendication 1, **caractérisé en ce que** le premier canal (28) constitue un canal haut et le second canal (30) constitue un canal bas, ce qui permet d'assurer un échange thermique lorsque la température du premier canal est inférieure à celle du second canal et d'interdire un échange thermique lorsque la température du premier canal est supérieure à celle du second canal.

4. Dispositif selon l'une des revendications 1 à 3, **caractérisé en ce qu'**il comprend des moyens de sélection (20, 56 ; 58, 60) pour placer le dispositif dans l'un ou l'autre de deux états comprenant un premier état dans lequel le premier canal (28) constitue un canal bas et le second canal (30) constitue un canal haut et un second état dans lequel le premier canal (28) constitue un canal haut et le second canal (30) constitue un canal bas.

5. Dispositif selon la revendication 4, **caractérisé en ce qu'**il comprend des premiers modules (12) configurés dans le premier état et des seconds modules (12) configurés dans le second état, et **en ce que** les moyens de sélection comprennent des moyens (20, 56) pour rendre opératoires soit les premiers modules soit les seconds modules.

6. Dispositif selon la revendication 4, **caractérisé en ce que** les modules (12) sont configurés dans un état et **en ce que** les moyens de sélection comprennent des moyens de retournement pour retourner les modules afin qu'ils se trouvent dans l'autre des états.

7. Dispositif selon la revendication 6, **caractérisé en ce qu'**il comprend un élément (36) du type volet ou analogue regroupant un ou plusieurs modules (12) et susceptibles de passer du premier état au second état, ou inversement, par retournement.

8. Dispositif selon l'une des revendications 1 à 7, **caractérisé en ce qu'**il comprend des moyens de blocage (54 ; 20, 56) pour bloquer volontairement la circulation du fluide caloporteur (FC).

9. Dispositif selon l'une des revendications 1 à 8, **caractérisé en ce que** la première paroi (14) est propre à être exposée à un rayonnement solaire (S), tandis que la seconde paroi (16) est adossée à une masse thermique à chauffer ou refroidir.

10. Dispositif selon l'une des revendications 1 à 9, **caractérisé en ce que** la seconde paroi (16) est adossée à un mur (38) d'un bâtiment.

11. Dispositif selon l'une des revendications 1 à 10, **caractérisé en ce que** le fluide caloporteur (FC) est de l'air.

12. Dispositif selon l'une des revendications 1 à 11, **caractérisé en ce que** le module (12) est formé d'un matériau isolant.

13. Dispositif selon l'une des revendications 1 à 12, **caractérisé en ce que** le matériau isolant est choisi parmi un polymère, un béton cellulaire, un matériau souple tel qu'un tissu.

14. Dispositif selon l'une des revendications 1 à 13, **caractérisé en ce que** le module comprend un noyau isolant (20) propre à être placé entre la première paroi (14) et la seconde paroi (16) pour contribuer à définir respectivement le premier canal (28) et le second canal (30), ainsi qu'une cloison supérieure (24) et une cloison inférieure (26) propres à être placées respectivement au dessus et au dessous du noyau (20) pour contribuer à définir respectivement le canal supérieur (32) et le canal inférieur (34).

## Claims

1. Device for transferring heat between a first wall and a second wall, in contact with a first thermal mass and a second thermal mass respectively, the device comprising an insulating unit (12) capable of being interposed between the first wall (14) and the second wall (16) in order to define a closed loop for the circulation of a heat-exchanging fluid (FC) which comprises a first channel (28) extending substantially vertically along the first wall (14) and a second channel (30) extending substantially vertically along the second wall (16), **characterised in that** the first channel and the second channel are staggered with respect to one another in the vertical direction in order to define a low channel and a high channel as well as an upper channel (32) connecting the first channel and the second channel, and a lower channel (34) connecting the first channel and the second channel, in such a manner that the circulation of the heat-exchanging fluid (FC) is effected naturally in the loop when the low channel is at a higher temperature than the high channel, which permits a heat transfer, and that the circulation of the heat-exchanging fluid (FC) is blocked naturally in the loop when the low channel is at a lower temperature than the high channel, which prevents heat transfer, creating a heat insulator.

2. Device according to claim 1, **characterised in that** the first channel (28) forms a low channel and the second channel (30) forms a high channel, which makes it possible to effect a heat exchange when the temperature of the first channel is higher than that of the second channel and to prevent a heat exchange when the temperature of the first channel is lower than that of the second channel.

3. Device according to claim 1, **characterised in that** the first channel (28) forms a high channel and the second channel (30) forms a low channel, which makes it possible to effect a heat exchange when the temperature of the first channel is lower than that of the second channel and to prevent a heat exchange when the temperature of the first channel is higher than that of the second channel.

4. Device according to one of claims 1 to 3, **characterised in that** it comprises selection means (20, 56; 58, 60) for placing the device in one or other of the two states, comprising a first state in which the first channel (28) forms a low channel and the second channel (30) forms a high channel, and a second state in which the first channel (28) forms a high channel and the second channel (30) forms a low channel.

5. Device according to claim 4, **characterised in that** it comprises first units (12) configured in the first state and second units (12) configured in the second state, and **in that** these selection means comprise means (20, 56) for making operative either the first units or the second units.

6. Device according to claim 4, **characterised in that** the units (12) are configured in one state and the selection means have means of turning the units over to the other state.

7. Device according to claim 6, **characterised in that** it comprises an element (36) of the shutter type or the like combining one or more units (12) and capable of moving from the first state to the second state, or vice versa, by turning over.

8. Device according to one of claims 1 to 7, **characterised in that** it comprises blocking means (54; 20, 56) for selectively blocking the circulation of the heat-exchanging fluid (FC).

9. Device according to one of claims 1 to 8, **characterised in that** the first wall (14) is capable of being exposed to solar radiation (S), whereas the second wall (16) is backed by a thermal mass for heating or cooling.

10. Device according to one of claims 1 to 9, **characterised in that** the second wall (16) is backed by an outside wall (38) of a building.

11. Device according to one of claims 1 to 10, **characterised in that** the heat-exchanging fluid (FC) is air.

12. Device according to one of claims 1 to 11, **characterised in that** the unit (12) is formed of an insulating material.

13. Device according to one of claims 1 to 12, **characterised in that** the insulating material is selected from a polymer, a cellular concrete, or a flexible material such as fabric.

14. Device according to one of claims 1 to 13, **characterised in that** the unit comprises an insulating core (20) capable of being placed between the first wall (14) and the second wall (16) in order to help to define the first channel (28) and the second channel (30) respectively, as well as an upper partition (24) and a lower partition (26) capable of being placed above and below the core (20) respectively to help define the upper channel (32) and the lower channel (34) respectively.

## Patentansprüche

1. Vorrichtung zum Wärmeaustausch zwischen einer ersten Wand und einer zweiten Wand, die in Kontakt mit einer ersten bzw. zweiten thermischen Masse stehen, wobei die Vorrichtung ein Isoliermodul (12) aufweist, das geeignet ist, zwischen die erste Wand (14) und die zweite Wand (16) gestellt zu sein, um eine geschlossene Zirkulationsschleife eines Kühlmediums (FC) zu umgrenzen, das einen ersten Kanal (20) aufweist, der sich im wesentlichen senkrecht entlang der ersten Wand (14) erstreckt und einen zweiten Kanal (30), der sich im wesentlichen senkrecht entlang der zweiten Wand (16) erstreckt,
**dadurch gekennzeichnet, dass**
der erste Kanal und der zweite Kanal in Vertikalrichtung gegeneinander versetzt sind, um einen tiefer gelegenen und einen höher gelegenen Kanal zu definieren, sowie einen oberen Kanal (32), der den ersten Kanal und den zweiten Kanal verbindet, und einen unteren Kanal (34), der den ersten Kanal und den zweiten Kanal verbindet,
derart, dass die Zirkulation des Kühlmediums (FC) sich auf natürliche Weise in der Schleife vollzieht, wenn der tiefer gelegene Kanal sich auf einer höheren Temperatur als der höher gelegene Kanal befindet, was einen Wärmeaustausch ermöglicht,
und dass die Zirkulation des Kühlmediums (FC) auf natürliche Weise in der Schleife blockiert wird, wenn der tiefer gelegene Kanal eine niedrigere Temperatur als der höher gelegene Kanal aufweist, was den Wärmeaustausch unter Bildung eines Wärmeisolators unterbindet.

2. Vorrichtung nach Anspruch 1, **dadurch gekennzeichnet, dass** der erste Kanal (28) einen tiefer gelegenen Kanal und der zweite Kanal (30) einen höher gelegenen Kanal bildet, was das Sicherstellen eines Wärmeaustauschs ermöglicht, wenn die Temperatur des ersten Kanals höher als die des zweiten Kanals ist, und das Unterbinden eines Wärmeaustauschs ermöglicht, wenn die Temperatur des ersten Kanals niedriger als die des zweiten Kanals ist.

3. Vorrichtung nach Anspruch 1, **dadurch gekennzeichnet, dass** der erste Kanal (28) einen höher gelegenen Kanal und der zweite Kanal (30) einen tiefer gelegenen Kanal bildet, was das Sicherstellen eines Wärmeaustauschs ermöglicht, wenn die Temperatur des ersten Kanals niedriger ist als die des zweiten Kanals, und das Unterbinden eines Wärmeaustauschs ermöglicht, wenn die Temperatur des ersten Kanals höher ist als die des zweiten Kanals.

4. Vorrichtung nach einem der Ansprüche 1 bis 3, **dadurch gekennzeichnet, dass** sie Auswahlmittel (20, 56; 58, 60) aufweist, um die Vorrichtung in die eine oder andere von zwei Stellungen zu bringen, die eine erste Stellung, in der der erste Kanal (28) einen tiefer gelegenen Kanal und der zweite Kanal (30) einen höher gelegenen Kanal bildet, und eine zweite Stellung umfassen, in der der erste Kanal (28) einen höher gelegenen Kanal und der zweite Kanal (30) einen tiefer gelegenen Kanal bildet.

5. Vorrichtung nach Anspruch 4, **dadurch gekennzeichnet, dass** sie erste Module (12), die in der ersten Stellung angeordnet sind, und zweite Module (12) aufweist, die in der zweiten Stellung angeordnet sind, und dass die Auswahlmittel Mittel (20, 56) zum Inbetriebsetzen der ersten oder der zweiten Module aufweisen.

6. Vorrichtung nach Anspruch 4, **dadurch gekennzeichnet, dass** die Module (12) in einer Stellung angeordnet sind, und dass die Auswahlmittel Wendemittel aufweisen, um die Module zu wenden, damit sie sich in der anderen der Stellungen befinden.

7. Vorrichtung nach Anspruch 6, **dadurch gekennzeichnet, dass** sie ein Element (36) vom Typ Klappe oder ähnlich aufweist, das ein oder mehrere Module (12) zusammenfasst und das geeignet ist, von der ersten Stellung in die zweite Stellung durch Wenden überzugehen oder umgekehrt.

8. Vorrichtung gemäß einem der Ansprüche 1 bis 7, **dadurch gekennzeichnet, dass** sie Mittel zum Blockieren (54; 20, 56) aufweist, um nach Wahl die Zirkulation des Kühlmediums (FC) zu blockieren.

9. Vorrichtung nach einem der Ansprüche 1 bis 8, **dadurch gekennzeichnet, dass** die erste Wand (14) geeignet ist, einer Sonnenstrahlung (S) ausgesetzt zu sein, wohingegen die zweite Wand (16) an einer zu wärmenden oder zu kühlenden thermischen Masse angebracht ist.

10. Vorrichtung nach einem der Ansprüche 1 bis 9, **dadurch gekennzeichnet, dass** die zweite Wand (16) an einer Mauer (38) eines Gebäudes angebracht ist.

11. Vorrichtung nach einem der Ansprüche 1 bis 10, **dadurch gekennzeichnet, dass** das Kühlmedium (FC) Luft ist.

12. Vorrichtung nach einem der Ansprüche 1 bis 11, **dadurch gekennzeichnet, dass** das Modul (12) aus Wärmedämmmaterial gebildet ist.

13. Vorrichtung nach einem der Ansprüche 1 bis 12, **dadurch gekennzeichnet, dass** das Wärmedämmmaterial aus einem Polymer, Gasbeton und einem biegsamen Material wie zum Beispiel Stoff ausgewählt ist.

14. Vorrichtung nach einem der Ansprüche 1 bis 13, **dadurch gekennzeichnet, dass** das Modul einen Isolierkern (20) aufweist, der geeignet ist, zwischen der ersten Wand (14) und der zweiten Wand (16) angeordnet zu sein, um zur Bildung des ersten Kanals (28) bzw. des zweiten Kanals (30) beizutragen, sowie eine obere Zwischenwand (24) und eine untere Zwischenwand (26), die geeignet sind, oberhalb bzw. unterhalb des Kerns (20) angeordnet zu sein, um zur Bildung des oberen Kanals (32) und des unteren Kanals (34) beizutragen.
